(19) Europäisches Patentamt / European Patent Office / Office européen des brevets

(11) **EP 3 649 094 B1**

(12) **EUROPÄISCHE PATENTSCHRIFT**

(45) Veröffentlichungstag und Bekanntmachung des Hinweises auf die Patenterteilung:
**14.04.2021 Patentblatt 2021/15**

(21) Anmeldenummer: **18739500.9**

(22) Anmeldetag: **05.07.2018**

(51) Int Cl.:
*C04B 35/04* (2006.01)    *C04B 35/10* (2006.01)
*C04B 35/48* (2006.01)    *C04B 35/563* (2006.01)
*C04B 35/628* (2006.01)    *C04B 38/00* (2006.01)

(86) Internationale Anmeldenummer:
**PCT/EP2018/068220**

(87) Internationale Veröffentlichungsnummer:
**WO 2019/008086 (10.01.2019 Gazette 2019/02)**

(54) **KERAMISCHES BAUTEIL MIT EINEM GRAPHENHALTIGEN MATERIAL UMMANTELTEN PARTIKULÄREN TRÄGERMATERIAL**

CERAMIC COMPONENT COMPRISING A PARTICULATE CARRIER MATERIAL, WHICH IS SHEATHED IN A GRAPHENE-CONTAINING MATERIAL

ÉLÉMENT EN CÉRAMIQUE COMPRENANT UN SUPPORT PARTICULAIRE, ENROBÉ D'UN MATÉRIAU CONTENANT DU GRAPHÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2017 DE 102017211663**

(43) Veröffentlichungstag der Anmeldung:
**13.05.2020 Patentblatt 2020/20**

(73) Patentinhaber: **EagleBurgmann Germany GmbH & Co. KG**
**82515 Wolfratshausen (DE)**

(72) Erfinder:
• **MÜLHAUPT, Rolf**
**79117 Freiburg (DE)**
• **THELKE, Jörg**
**82515 Wolfratshausen (DE)**
• **ZHANG, Wenli**
**01309 Dresden (DE)**

(74) Vertreter: **Hoefer & Partner Patentanwälte mbB**
**Pilgersheimer Straße 20**
**81543 München (DE)**

(56) Entgegenhaltungen:
**EP-A1- 3 119 732**      **CN-A- 106 128 562**
**DE-A1-102014 018 275**      **US-A1- 2012 058 397**

**Beschreibung**

Die Erfindung betrifft ein keramisches Bauteil mit sehr guter Stabilität, geringem Abrieb sowie sehr guter elektrischer Leitfähigkeit.

Aus dem Stand der Technik, z.B. der DE 10 2014 205 297 A1, ist eine Gleitringdichtung bekannt, die als Basismaterial SiC enthält, das mit Graphen als Füllstoff versetzt ist. Die Gleitringdichtung zeichnet sich durch eine gute Rißzähigkeit und Biegefestigkeit aus. Nachteilig hieran sind die vergleichsweise geringe Härte und das niedrige Elastizitätsmodul. Hierdurch ist die Abriebfestigkeit reduziert und die Gleitringdichtung eignet sich weniger für den Einsatz in mechanisch und/oder thermisch belasteten Systemen. Ferner ist aus der DE 10 2014 0182 75 A1 ein nichtmetallisches Farbpigment bekannt, welches einen plättchenförmigen Träger, eine farblose Zwischenschicht mit einer Brechzahl n ≥ 1,8 sowie eine äußerste Schicht aus Kohlenstoff aufweist und kristallinen Kohlenstoff in Form von Graphit und/oder Graphen enthält.

Es ist daher Aufgabe der Erfindung, ein keramisches Bauteil, insbesondere ein Gleitelement, eine Gleitringdichtung, eine Lageranordnung oder eine Halterung bereitzustellen, die sich durch eine verbesserte Abriebfestigkeit und Härte und damit durch eine erhöhte Stabilität selbst unter hohen mechanischen und/oder thermischen Belastungen auszeichnen.

Die Lösung dieser Aufgabe erfolgt durch ein keramisches Bauteil gemäß Anspruch 1.

Das erfindungsgemäße keramische Bauteil mit den Merkmalen des Anspruchs 1 weist eine hohe elektrische Leitfähigkeit, insbesondere größer als $5,3 \times 10^{-3}$ S/cm, und eine hohe Bruchzähigkeit auf, jeweils bei Raumtemperatur (20 °C). Dabei umfasst das keramische Bauteil ein partikuläres Trägermaterial und ein graphenhaltiges Material. Die verbesserte elektrische Leitfähigkeit wird insbesondere dann erhalten, wenn eine dopaminhaltige Kohlenstoffquelle als Ausgangssubstanz für das graphenhaltige Material verwendet wird.

Unter einem partikulären Trägermaterial wird erfindungsgemäß ein Material verstanden, das als Substrat, also als Basismaterial, für das Aufbringen von graphenhaltigem Material dient. Das partikuläre Trägermaterial liegt in Form von Partikeln vor, die mindestens teilweise, und insbesondere vollständig, von dem graphenhaltigen Material ummantelt sind.

Unter einem graphenhaltigen Material wird im Sinne der vorliegenden Erfindung ein Material verstanden, das mindestens teilweise aus Graphen besteht. Vorzugsweise besteht das gesamte graphenhaltige Material bis auf technisch unvermeidbare Rückstände aus Graphen.

Zwischen dem partikulären Trägermaterial und dem graphenhaltigen Material ist eine stoffschlüssige Verbindung vorhanden. Dies bedeutet, dass zwischen dem partikulären Trägermaterial und dem graphenhaltigen Material eine Verbindung besteht, bei der das graphenhaltige Material direkt auf der Oberfläche des partikulären Trägermaterials haftet. Die stoffschlüssige Verbindung kann dabei insbesondere durch physikalische und/oder chemische Wechselwirkungen zwischen dem partikulären Trägermaterial und dem graphenhaltigen Material geprägt sein. Auch können Zwischenverbindungen zwischen Graphen und dem partikulären Trägermaterial in die Verbindungsbildung mit eingehen. Durch die stoffschlüssige Verbindung wird eine dauerhaft gute, abriebfeste Beschichtung mit graphenhaltigem Material auf der Oberfläche des partikulären Trägermaterials erhalten. Weiter weist das keramische Bauteil bei Raumtemperatur (20 °C) einen spezifischen elektrischen Widerstand von 1 Ω cm bis 100 Ω cm und insbesondere von 20 Ω cm auf.

Hierdurch zeichnet sich das keramische Bauteil selbst bei hoher mechanischer Belastung und hohen Temperaturen durch eine hohe Härte und ein hohes Elastizitätsmodul aus, wodurch eine hohe Abriebfestigkeit des keramischen Bauteils bei gleichzeitig guten Gleiteigenschaften erhalten wird. Weiterhin wird eine verbesserte Bruchzähigkeit des keramischen Bauteils erreicht.

Weiter umfasst das keramische Bauteil einen ersten Basiskörper. Der Basiskörper ist als Grundkörper anzusehen, an bzw. auf dem z.B. eine entsprechende Gleitfläche angeordnet oder ausgebildet ist. Zur Verbesserung einer Bindung zwischen dem Basiskörper und der Gleitfläche weist der erste Basiskörper ausschließlich das partikuläre Trägermaterial auf. Dies bedeutet mit anderen Worten, dass der erste Basiskörper aus demselben partikulären Trägermaterial gebildet ist wie das mit graphenhaltigem Material ummantelte partikuläre Trägermaterial, das jedoch, im Gegensatz zu dem in der ersten Gleitfläche enthaltenen partikulären Trägermaterial nicht von graphenhaltigem Material ummantelt ist.

Die Unteransprüche haben vorteilhafte Ausgestaltungen und Weiterbildungen der Erfindung zum Inhalt.

Gemäß einer vorteilhaften Weiterbildung ist das partikuläre Trägermaterial vollständig von dem graphenhaltigen Material ummantelt. Dies bedeutet, dass die Partikeloberfläche des partikulären Trägermaterials allseitig von dem graphenhaltigen Material ummantelt ist. Hierdurch kann die Abriebfestigkeit des keramischen Bauteils, insbesondere eines Gleitelements, bei Maximierung des Elastizitätsmoduls verbessert werden.

Das keramische Bauteil ist vorzugsweise ein Gleitelement. Aus Gründen der verbesserten Gleiteigenschaften bei guter Stabilität ist vorzugsweise die gesamte erste Gleitfläche aus dem mit dem graphenhaltigem Material ummantelten Trägermaterial bzw. ist weiter vorteilhaft das gesamte Gleitelement aus mit graphenhaltigem Material ummantelten Trägermaterial gebildet. Hierdurch kann auch eine Rissbildung im graphenhaltigen Material reduziert oder sogar vermieden werden.

Aus Gründen der Kostenreduktion bei guter Härte des keramischen Bauteils, ist vorteilhaft vorgesehen, dass das keramische Bauteil aus einem Gemisch an partikulärem Trägermaterial und mit graphenhaltigem Material ummanteltem partikulärem Trägermaterial besteht.

Weiter vorteilhaft beträgt ein Masseverhältnis an partikulärem Trägermaterial und mit graphenhaltigem Material ummanteltem partikulärem Trägermaterial 80:20 bis 99,5:0,5 und insbesondere 90:10 bis 99,5:0,5. Bei geringem Materialeinsatz für Graphen kann somit ein keramisches Bauteil mit sehr guter Abriebfestigkeit erhalten werden. Das keramische Bauteil kann somit kostengünstig hergestellt werden. Weiter bevorzugt erhöht sich eine Bruchzähigkeit eines keramischen Bauteils, welches aus einem Gemisch aus partikulärem Trägermaterial und mit graphenhaltigem Material ummantelten partikulären Trägermaterial hergestellt ist, um einen Prozentsatz im Bereich von 5% bis 25%, abhängig vom Anteil des mit graphenhaltigen Material ummantelten partikulären Trägermaterial am Masseverhältnis des keramischen Bauteils. D.h., z.B. bei einem Masseanteil des mit graphenhaltigem Material ummantelten partikulären Trägermaterials in einem Bereich von 1 bis 4 Gew.% am keramischen Bauteil erhöht sich dessen Bruchzähigkeit gegenüber einem ausschließlich aus dem partikulären Trägermaterial hergestellten keramischen Bauteil um mind. 10% im Vergleich mit einem keramischen Bauteil aus 100% partikulärem Trägermaterial. Die Bruchzähigkeit wird z.B. mit der SEVNB-Methode (Single-Edge-V-notched-Beam) bestimmt.

Zur weiteren Verbesserung der Abriebfestigkeit des keramischen Bauteils durch Erhöhung der Härte, ist das partikuläre Trägermaterial vorzugsweise ein keramisches Material. Keramische Materialien, also gebrannte Keramiken haben sich selbst unter harschen Bedingungen, wie z.B. einer hohen mechanischen und/oder thermischen Belastung, als besonders abriebfest herausgestellt. Vorteilhaft ist das keramische Material ausgewählt aus der Gruppe bestehend aus: SiC, WC, $B_4C$, BN, $Si_3N_4$, $Al_2O_3$, MgO, $ZrO_2$ und beliebigen Gemischen daraus, wobei SiC aus Kostengründen besonders bevorzugt ist.

Im Hinblick auf eine weitere Verbesserung der Abriebfestigkeit des keramischen Bauteils ist ferner vorteilhaft vorgesehen, dass die graphenhaltige Ummantelung eine Lage bis 100 Lagen, insbesondere eine Lage bis 20 Lagen und insbesondere eine Lage bis zwölf Lagen an graphenhaltigem Material umfasst. Durch den Lagenaufbau können zudem die tribologischen Eigenschaften des keramischen Bauteils, insbesondere des Gleitelements, optimiert werden.

Eine deutliche Reduzierung des potentiellen Verschleißvolumens des keramischen Bauteils lässt sich durch die vorteilhafte Weiterbildung erzielen, in der das keramische Bauteil 6 bis 8 Vol% Makroporen, bezogen auf das Gesamtvolumen des keramischen Bauteils, enthält. Unter Makroporen werden hierbei im Sinne der vorliegenden Erfindung Poren mit einem Porendurchmesser von 10 bis 50 μm verstanden. Der Porendurchmesser wird hierbei durch ein LSM-Verfahren (Laser-Scanning-Microscopy) bestimmt. Vorzugsweise ist das keramische Bauteil frei von Mikroporen mit einem Porendurchmesser von 1 bis 10 μm. Porenfrei bedeutet hierbei, dass zwischen dem mit graphenhaltigem Material ummantelten partikulären Trägermaterial und etwaigem vorliegenden nicht ummantelten partikulären Trägermaterial keine Mikroporen vorhanden sind. Die Dichte des keramischen Bauteils ist somit optimal, wodurch insbesondere auch die Abriebbeständigkeit bei guten Gleiteigenschaften erhöht werden kann.

Ferner erfindungsgemäß wird auch ein Gleitelement, umfassend eine erste Gleitfläche, welche ein erfindungsgemäßes keramisches Bauteil ist, insbesondere eine Gleitringdichtung, beschrieben. Die erfindungsgemäße Gleitringdichtung umfasst einen rotierenden ersten Gleitring mit einer ersten Gleitfläche und einen stationären zweiten Gleitring mit einer zweiten Gleitfläche, welche zwischen sich einen Dichtspalt definieren. In der erfindungsgemäßen Gleitringdichtung ist der erste Gleitring oder der zweite Gleitring oder sind insbesondere beide Gleitringe in Form des wie vorstehend beschriebenen erfindungsgemäßen Gleitelements ausgebildet. Durch Ausbildung eines oder sogar beider Gleitringe der Gleitringdichtung in Form des erfindungsgemäßen Gleitelements, kann auch in der erfindungsgemäßen Gleitringdichtung selbst bei hoher mechanischer Belastung und hohen Temperaturen eine hohe Härte und ein hohes Elastizitätsmodul erzielt werden, wodurch eine hohe Abriebfestigkeit des ersten und/oder zweiten Gleitrings bei gleichzeitig guten Gleiteigenschaften erhalten werden kann.

Darüber hinaus erfindungsgemäß wird auch eine Lageranordnung beschrieben, die mindestens ein wie vorstehend offenbartes Gleitelement umfasst. Die Lageranordnung kann beispielsweise in Form eines Gleitlagers oder eines Wälzlagers ausgebildet sein. Besonders bevorzugt ist die Ausführung in Form eines Gleitlagers, das insbesondere ein Radialgleitlager oder ein Axialgleitlager ist. Eines oder beide Gleitelemente bzw. eine oder beide Gleitflächen des Gleitlagers sind bevorzugt entsprechend einem erfindungsgemäßen Gleitelement ausgebildet. Derartige Lageranordnungen werden bevorzugt bei Pumpen oder Magnetkupplungen verwendet.

Die Lageranordnung umfasst bevorzugt zumindest einen äußeren Laufring und einen inneren Laufring, wobei das Wälzlager zudem noch Wälzkörper umfasst. Erfindungsgemäß ist nun der äußere Laufring oder der innere Laufring oder sind beide Laufringe in Form des vorstehend offenbarten erfindungsgemäßen Gleitelements ausgebildet. Sofern die Lageranordnung ein Wälzlager ist, können alternativ oder auch additiv dazu ein oder mehrere Wälzkörper in Form des erfindungsgemäßen Gleitelements ausgebildet sein. Hierdurch kann bei Bereitstellung von sehr guten Gleiteigenschaften selbst bei hohen Temperaturen und hoher mechanischer Belastung eine sehr gute Abriebfestigkeit der Lageranordnung erzielt werden.

Weiterhin wird erfindungsgemäß eine Halterung, insbesondere eines Raumflugkörpers wie z.B. eines Satelliten, beschrieben. Derartige Halterungen oder andere Bauteile des Raumflugkörpers haben den Vorteil, dass die im All auftretenden Temperaturwechselbelastungen keine negativen Auswirkungen auf das Bauteil haben.

Ebenfalls wird auch ein Verfahren zur Herstellung eines mit einem graphenhaltigen Material ummantelten partikulären Trägermaterials beschrieben. Das hergestellte Trägermaterial kann aufgrund seiner sehr guten mechanischen Eigenschaften insbesondere zur Verbesserung der Abriebfestigkeit eines keramischen Bauteils, wie beispielsweise einer Gleitfläche eines Gleitrings oder einer Lageranordnung, verwendet werden, wobei das keramische Bauteil eine sehr gute elektrische Leitfähigkeit, insbesondere im Bereich von $5,3 \times 10^{-3}$ bis $5,3 \times 10^{-1}$ S/cm aufweist. Die elektrische Leitfähigkeit kann dabei insbesondere durch Messung des elektrischen spezifischen Widerstands ermittelt werden, z.B. mittels einer Wheatstoneschen Messbrücke.

Das Verfahren umfasst zunächst einen Schritt des Dispergierens eines partikulären Trägermaterials in einem Dispergiermittel. Sowohl das partikuläre Trägermaterial als auch das Dispergiermittel sind im Einzelnen nicht beschränkt. Das partikuläre Trägermaterial kann insbesondere wie vorstehend für die erfindungsgemäße Gleitelement ausgebildet sein und hierzu vorteilhaft mindestens ein keramisches Material und insbesondere SiC, umfassen. Als Dispergiermittel wird ein Medium gewählt, in dem das partikuläre Trägermaterial gut verteilbar ist. Aus Kostengründen und Gründen des Umweltschutzes sind wasserhaltige und/oder alkoholhaltige, und hierunter insbesondere ethanolhaltige Dispergiermittel, bevorzugt. Das Dispergieren kann z.B. unter Anwendung von Ultraschall und/oder unter Verwendung eines Rührers und/oder eines Homogenisators ausgeführt werden. Wesentlich hierbei ist eine gute Verteilung der Partikel des partikulären Trägermaterials in dem Dispergiermittel.

In einem weiteren Schritt erfolgt das Zugeben einer Dopamin enthaltenden Kohlenstoffquelle, insbesondere aus nachwachsenden Rohstoffen. Diese Verbindung ist hierbei geeignet, unter entsprechender Weiterverarbeitung graphenhaltiges Material zu bilden. Die Kohlenstoffquelle ist mit anderen Worten ein Graphen-Precursor.

Im Anschluss daran wird das Dispergiermittel unter Erhalt einer Festsubstanz entfernt. Hierbei können übliche Verfahrensschritte angewendet werden, wie beispielsweise ein Entfernen des Dispergiermittels durch Temperaturanwendung, durch Verdampfen des Dispergiermittels in einem Rotationsverdampfer oder durch Gefriertrocknung. Es verbleibt eine Festsubstanz aus Kohlenstoffquelle für das zu bildende graphenhaltige Material und partikulärem Trägermaterial, wobei die Kohlenstoffquelle auf einer Oberfläche des partikulären Trägermaterials angeordnet ist.

Hieran schließt sich ein Schritt des Carbonisierens der chemischen Verbindung an. Das Carbonisieren wird unter Temperaturbehandlung ausgeführt, und zwar derart, dass graphenhaltiges Material das partikuläre Trägermaterial mindestens teilweise, insbesondere vollständig, ummantelt. Die hierzu erforderliche thermische Behandlung kann insbesondere in einem Rohrofen ausgeführt werden, dessen Temperatur gut steuerbar ist.

Durch das direkte Carbonisieren von auf einer Oberfläche des partikulären Trägermaterials angeordnetem Graphen-Precursor wird eine stoffschlüssige Verbindung zwischen dem Trägermaterial und dem erzeugten Graphen gebildet. Damit ist die graphenhaltige Ummantelung dauerhaft fest und stabil mit dem partikulären Trägermaterial verbunden, wodurch eine hohe Abriebfestigkeit erzeugt wird. Das Verfahren ist einfach ausführbar und ermöglicht die Herstellung von mit graphenhaltigem Material ummanteltem partikulärem Trägermaterial mit hoher Ausbeute.

Aus Gründen des Umweltschutzes und auch deshalb, weil diese Kohlenstoffquelle aus nachwachsenden Rohstoffen abstammt, ist die Kohlenstoffquelle vorteilhafterweise ausgewählt aus der Gruppe bestehend aus: Dopamin oder einer Mischung aus Dopamin und Furfurylalkohol und/oder Glucose. Diese Verbindungen bilden zudem sehr leicht unter thermischer Behandlung Graphen mit hoher Ausbeute. Die Verwendung von Dopamin stellt eine hohe elektrische Leitfähigkeit des keramischen Bauteils bereit.

Zur Erhöhung der Ausbeute an mit graphenhaltigem Material ummanteltem partikulärem Trägermaterial wird vorzugsweise die nach dem Entfernen des Dispergiermittels erhaltene Festsubstanz vor dem Carbonisieren zerkleinert. Die Festsubstanz hat nach dem Zerkleinern insbesondere einen Partikeldurchmesser von weniger als 1 mm und insbesondere von weniger als 0,1 mm. Somit kann auch eine Temperaturbehandlung unter Bildung einer graphenhaltigen Mantelschicht besonders gleichförmig ausgeführt werden.

Als besonders vorteilhaft für die Bildung einer graphenhaltigen Ummantelung eines partikulären Trägermaterials hat sich ein mindestens zweistufiger Temperaturprozess herausgestellt. Das Carbonisieren wird hierzu insbesondere in einem zweistufigen Temperaturprozess unter Inertgasatmosphäre ausgeführt, wobei in einem ersten Temperaturschritt die Festsubstanz mit einer Heizrate von 5 °C/min auf 80 bis 180 °C aufgeheizt und für 15 bis 25 Stunden auf diesem Temperaturbereich gehalten wird und wobei in einem zweiten Temperaturschritt die Festsubstanz mit einer Heizrate von 5 °C/min auf 600 bis 1500 °C aufgeheizt und für 4 bis 8 Stunden auf diesem Temperaturbereich gehalten wird. Hierdurch wird es möglich, den Graphen-Precursor nahezu vollständig in Graphen umzuwandeln, so dass die das partikuläre Trägermaterial umgebende Mantelschicht weitestgehend, also bis auf technisch unvermeidbare Rückstände, aus Graphen besteht.

Nachfolgend werden vorteilhafte Weiterbildungen zur Herstellung von mit graphenhaltigem Material ummanteltem partikulärem Trägermaterial offenbart.

Für die Herstellung von Graphen beschichtetem SiC unter Verwendung von Dopamin (SiC : Dopamin = 90 : 10 Gew.-%) wird SiC (18 g) in Tris(hydroxymethyl)-aminomethan-Lösung (50 mL; 100 mmol/L in $H_2O$) mittels Ultraschallbad (15 min) dispergiert. Anschließend erfolgt die Zugabe einer Lösung von Dopamin (2.00 g) in Tris(hydroxymethyl)-aminomethan-Lösung (50 mL; 100 mmol/L in $H_2O$). Das Reaktionsgemisch wird unter Rühren bei Raumtemperatur für weitere 72 h gehalten. Danach wird das Wasser durch Gefriertrocknung entfernt. Das getrocknete Pulver wird nach Zerkleinern in einem Rohrofen bei inerter Atmosphäre ($N_2$) carbonisiert. Dazu wird in Schritten von 5 °C/min auf 150 °C erhitzt, für 21 h gehalten und anschließend in Schritten von 5 °C/min auf 1000 °C erhöht und für 5 h thermolysiert. Hier wird das funktionalisierte Graphen mit Dopamin als Kohlenstoffquelle über eine Templat vermittelte Reaktion hergestellt. SiC dient hier als Templat. Dabei wird auch ein homogenes Gemisch aus Graphen und SiC erhalten. Durch die Beschichtung mit Graphen verändern sich die spezifische Oberfläche, die durch $N_2$-Adsorption mittels eines BET-Verfahrens unter Verwendung eines Sorptomatic 1990 (Protec Hofheim) unter Bestimmung der massenbezogenen spezifischen Oberfläche einer Probe durch Detektion der Menge an adsorbiertem Stickstoff an die Probenoberfläche, gemessen wird, (von 10 auf 35 $m^2$/g) sowie die Farbe der SiC stark. Das Produkt besitzt einen Graphengehalt von 5.2 Gew.-%. Durch Beschichtung mit Graphen ergibt sich eine spezifische elektrische Leitfähigkeit von 5.3 x $10^{-2}$ S/cm.

Alternativ wird für die Herstellung von Graphen beschichtetem SiC unter Verwendung von Dopamin (SiC : Glucose = 80 : 20 Gew.-%) wird SiC (16 g) in Tris(hydroxymethyl)-aminomethan-Lösung (50 mL; 100 mmol/L in $H_2O$) mittels Ultraschallbad (15 min) dispergiert. Anschließend erfolgt die Zugabe einer Lösung von Dopamin (4.00 g) in Tris(hydroxymethyl)-aminomethan-Lösung (50 mL; 100 mmol/L in $H_2O$). Das Reaktionsgemisch wird unter Rühren bei 60 °C für weitere 96 h gehalten. Danach wird das Wasser durch Gefriertrocknung entfernt. Das getrocknete Pulver wird nach Zerkleinern in einem Rohrofen bei inerter Atmosphäre ($N_2$) carbonisiert. Dazu wird in Schritten von 5 °C/min auf 150 °C erhitzt, für 21 h gehalten und anschließend in Schritten von 5 °C/min auf 1000 °C erhöht und für 5 h thermolysiert. Das Produkt besitzt einen Graphengehalt von 8,4 Gew.-% und eine spezifische Oberfläche, die durch $N_2$-Adsorption mittels eines BET-Verfahrens unter Verwendung eines Sorptomatic 1990 (Protec Hofheim) unter Bestimmung der massenbezogenen spezifischen Oberfläche einer Probe durch Detektion der Menge an adsorbiertem Stickstoff an die Probenoberfläche, gemessen wird, von 66 $m^2$/g.

Die beiden vorhergehenden Ausführungsbeispiele mit Dopamin als Kohlenstoffquelle zeigen eine deutlich höhere elektrische Leitfähigkeit und einen spezifischen elektrischen Widerstand im Bereich von 1 bis 100 Ω cm (bei Raumtemperatur). Die Beschichtung mit Graphen basierend auf Dopamin führt zu einem starken Leitfähigkeitsanstieg auf 5.3 x $10^{-2}$ S/cm. Diese hohe elektrische Leitfähigkeit ermöglicht das Sintern des SiC-Graphen-Nanokomposits mittels SPS-/FAST-Prozess (**S**park **P**lasma **S**intern/**F**eld-**A**ktiviertes **S**intern). Damit können deutlich schnellere Sinterzyklen mit verbesserten Werkstoffeigenschaften und vollständiger Verdichtung realisiert werden. Wenn das Produkt elektrisch leitend ist, kann zudem das Reibverhalten bei einer tribologischen Belastung gezielt eingestellt werden, indem das elektrische Potenzial im Umgebungsmedium verändert wird. Die erhöhte elektrische Leitfähigkeit des Nanokomposits ermöglicht außerdem die Verwendung von innovativen Bearbeitungsverfahren wie die Elektroerosion.

Weiterhin weisen die beiden beschriebenen Ausführungsbeispiele mit Dopamin als Kohlenstoffquelle eine deutlich verbesserte Bruchzähigkeit auf als ein keramisches Bauteil, welches ausschließlich aus dem partikulären Trägermaterial, insbesondere SiC, hergestellt ist. Beispielsweise weist ein ausschließlich aus SiC als partikuläres Trägermaterial hergestelltes Bauteil eine Bruchzähigkeit von 3,00 MPa $\sqrt{m}$ auf. Ein Bauteil, welches aus einer Mischung aus SiC (partikuläres Trägermaterial) und mit Graphen ummanteltem partikulärem Trägermaterial hergestellt ist, weist bei einem Anteil von 98 Gew.% SiC und 2 Gew.% mit Graphen ummanteltem SiC eine Bruchzähigkeit von 3,70 MPa $\sqrt{m}$ auf. Ein Bauteil mit einem Anteil von 96 Gew.% SiC und 4 Gew.% mit Graphen ummanteltem SiC weist eine Bruchzähigkeit von 3,72 MPa $\sqrt{m}$ auf. Diese Versuchswerte machen deutlich, dass durch die Zugabe von mit Graphen ummanteltem partikulärem Trägermaterial zu einem partikulären Trägermaterial eine Bruchzähigkeit eines derart hergestellten keramischen Bauteils signifikant, insbesondere um 10% oder mehr, erhöht werden kann. Es sei angemerkt, dass bei allen Versuchen die Bruchzähigkeit mittels der SEVNB-Methode gemessen wurde. Somit weist das erfindungsgemäße keramische Bauteil neben einer verbesserten elektrischen Leitfähigkeit auch eine erhöhte Bruchzähigkeit auf, im Vergleich mit keramischen Bauteilen ohne mit Graphen ummantelten partikulärem Trägermaterial im Bauteil. Hierbei genügen schon relativ kleine Mengen, vorzugsweise zwischen 1 und 10 Gew.%, von mit Graphen ummanteltem partikulärem Trägermaterial im keramischen Bauteil, um die verbesserten Eigenschaften hinsichtlich elektrischer Leitfähigkeit und Bruchzähigkeit zu erreichen.

Ferner erfindungsgemäß wird auch ein Verfahren zur Herstellung eines keramischen Bauteils beschrieben. Das Verfahren ist damit auch anwendbar zur Herstellung eines keramischen Bauteils, einer Lageranordnung und eines Gleitrings, wie er in der vorstehend beschriebenen Gleitringdichtung verwendet wird, sowie einer Halterung eines Raumflugkörpers. Es wird daher auch hinsichtlich der Vorteile, vorteilhaften Effekte und Weiterbildungen, ergänzend Bezug genommen auf die Ausführungen zu dem erfindungsgemäßen Gleitelement.

In dem beschriebenen Verfahren wird ein keramisches Bauteil, z.B. ein Gleitelement, hergestellt, das eine Gleitfläche umfasst, die spezifisch ausgebildet wird. Hierzu wird in einem Schritt eine Mischung hergestellt, die ein partikuläres Trägermaterial und ein mindestens teilweise, insbesondere vollständig, mit einem graphenhaltigen Material ummanteltes partikuläres Trägermaterial umfasst. Das mit dem graphenhaltigen Material ummantelte partikuläre Trägermaterial ist z.B. durch das vorstehend beschriebene Verfahren zur Herstellung eines mit einem graphenhaltigen Material ummantelten partikulären Trägermaterials erhältlich. Das Mischen kann auf herkömmliche Weise, beispielsweise unter Verwendung eines Rührers und/oder eines Homogenisators und/oder durch Anwendung von Ultraschall, ausgeführt werden.

Die Mischung kann an sich als Gleitelement ausgebildet werden, sie kann aber auch beispielsweise auf einen Basiskörper aufgebracht werden, der insbesondere aus dem partikulären Trägermaterial besteht, und bildet dann lediglich eine Gleitfläche des Gleitelements.

In einem weiteren Schritt schließt sich ein Sintern der Mischung an. Hierdurch wird eine stoffschlüssige Verbindung, eine Sinterverbindung zwischen dem partikulären Trägermaterial und dem mit graphenhaltigem Material ummanteltem Trägermaterial, ausgebildet. Durch das Sintern wird insbesondere eine porenfreie Gleitfläche erzeugt. Ein durch das erfindungsgemäße Verfahren hergestelltes Gleitelement zeichnet sich bei einfacher und damit auch kostengünstiger Herstellung durch eine hohe Stabilität und Abriebfestigkeit, selbst bei starker mechanischer und/oder thermischer Belastung aus.

Aus Gründen der Verbesserung der Härte der Oberfläche des keramischen Bauteils, insbesondere der Gleitfläche, wird das partikuläre Trägermaterial vorteilhafterweise aus einem keramischen Material, insbesondere aus der Gruppe bestehend aus: SiC, WC, $B_4C$, BN, $Si_3N_4$, $Al_2O_3$, MgO, $ZrO_2$ und beliebigen Gemischen daraus ausgewählt, und besteht insbesondere aus SiC.

Zur weiteren Einsparung der Kosten bei Erhalt einer hohen Stabilität im keramischen Bauteil, wird die Mischung auf einen Basiskörper aufgebracht, wobei der Basiskörper insbesondere aus einem keramischen Material, insbesondere ausgewählt aus der Gruppe bestehend aus: SiC, WC, $B_4C$, BN, $Si_3N_4$, $Al_2O_3$, MgO, $ZrO_2$ und beliebigen Gemischen daraus, und insbesondere aus SiC, besteht.

Nachfolgend werden bevorzugte Ausführungsbeispiele der Erfindung unter Bezugnahme auf die begleitende Zeichnung im Detail beschrieben. Gleiche bzw. funktional gleiche Teile sind in der Zeichnung dabei jeweils mit den gleichen Bezugszeichen bezeichnet. In der Zeichnung ist:

Fig. 1 eine schematische Schnittansicht einer Gleitringdichtung gemäß einem ersten Ausführungsbeispiel der Erfindung;

Fig. 2 eine schematische Schnittansicht des in Fig. 1 gezeigten zweiten Gleitrings;

Fig. 3 eine schematische Längsschnittansicht einer Lageranordnung gemäß einem zweiten Ausführungsbeispiel der Erfindung;

Fig. 4 ein Querschnitt der in Fig. 3 gezeigten Lageranordnung;

Fig. 5 eine schematische Schnittansicht eines mit graphenhaltigem Material ummantelten partikulären Trägermaterials des in Figur 2 gezeigten stationären Gleitrings;

Fig. 6 eine schematische Darstellung eines Verfahrens zur Herstellung von mit graphenhaltigem Material ummanteltem partikulärem Trägermaterial gemäß einer Ausführungsform der Erfindung;

Fig. 7 eine schematische Darstellung eines Verfahrens zur Herstellung eines Gleitelements gemäß einer Ausführungsform der Erfindung.

Die vorliegende Erfindung wird anhand von Ausführungsbeispielen im Detail beschrieben. In den Figuren sind nur die wesentlichen Merkmale der vorliegenden Erfindung dargestellt, alle übrigen Merkmale sind der Übersichtlichkeit halber weggelassen. Ferner beziffern gleiche Bezugszeichen gleiche Elemente.

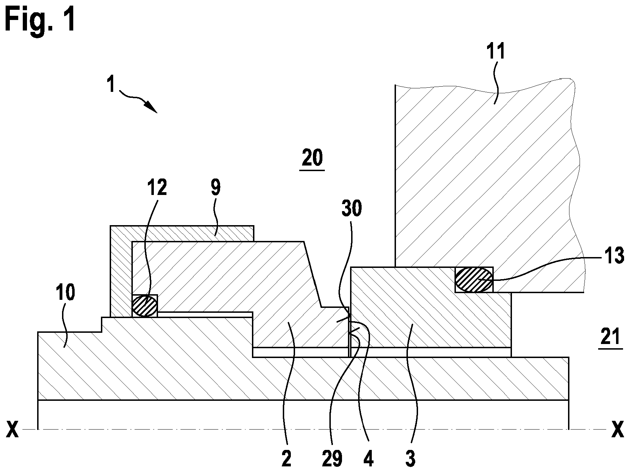

Fig. 1 zeigt schematisch ein als Gleitringdichtungsanordnung 1 ausgebildetes keramisches Bauteil mit einem rotierenden Gleitring 2 mit einer ersten Gleitfläche 29 und einem stationären Gleitring 3 mit einer zweiten Gleitfläche 30. Zwischen den beiden Gleitringen 2, 3 ist in bekannter Weise ein Dichtspalt 4 definiert. Der rotierende Gleitring 2 ist über ein Mitnahmeelement 9 mit einem rotierenden Bauteil 10, beispielsweise einer Wellenhülse oder dgl., verbunden. Die Bezugszeichen 12 und 13 bezeichnen O-Ringe. Der stationäre Gleitring 3 ist mit einem stationären Bauteil 11, wie z.B. einem Gehäuse o. dgl., verbunden.

Die Gleitringdichtungsanordnung 1 dichtet dabei einen Produktbereich 20 von einem Atmosphärenbereich 21 ab.

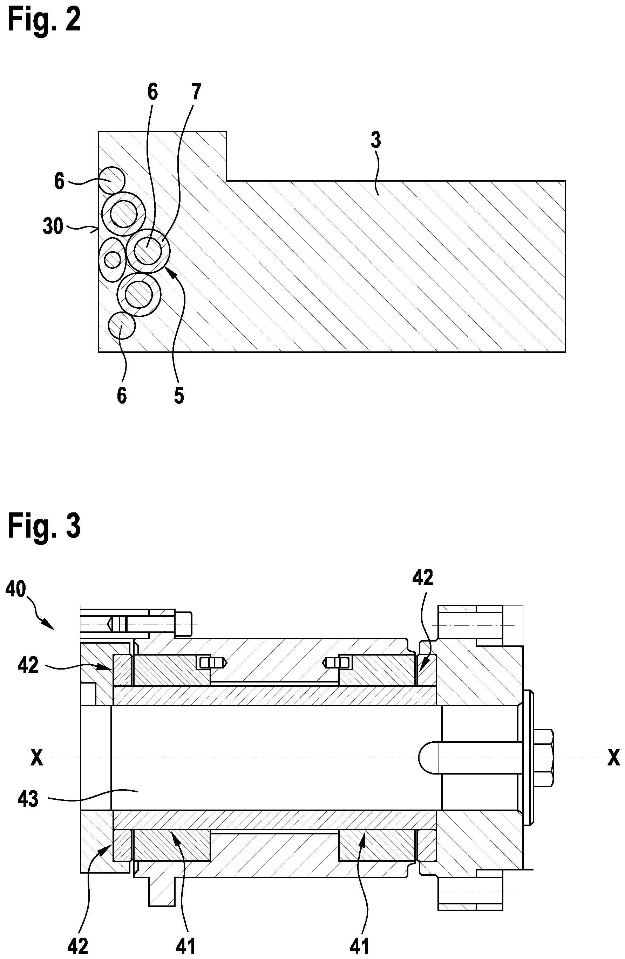

Der stationäre Gleitring 3 ist als Gleitelement im Sinne der vorliegenden Erfindung anzusehen und ist im Detail in Fig. 2 gezeigt. Der stationäre Gleitring 3 weist die zweite Gleitfläche 30 auf. Die zweite Gleitfläche 30 ist aus einem gesinterten Material gebildet, das ein partikuläres Trägermaterial 6 und ein graphenhaltiges Material 7 umfasst. Das partikuläre Trägermaterial 6 ist mindestens teilweise von dem graphenhaltigen Material 7 ummantelt, so dass das graphenhaltige Material 7 eine Oberfläche des partikulären Trägermaterials 6 mindestens abschnittsweise umgibt. In Figur 2 ist beispielhaft dargestellt, dass das graphenhaltige Material 7 das partikuläre Trägermaterial 6 vollständig umgibt. Dies ist aber nicht zwingend erforderlich.

Wie in Figur 2 ferner erkennbar ist, umfasst die zweite Gleitfläche 30 nicht nur ein mit graphenhaltigem Material ummanteltes Trägermaterial 5, sondern auch partikuläres Trägermaterial 6, das nicht mit graphenhaltigem Material ummantelt ist. Mit anderen Worten umfasst die zweite Gleitfläche 30 ein Gemisch an partikulärem Trägermaterial 6 und mit graphenhaltigem Material ummanteltem partikulärem Trägermaterial 5.

Hierbei beträgt ein Masseverhältnis an partikulärem Trägermaterial 6 und mit graphenhaltigem Material ummanteltem partikulärem Trägermaterial 5 vorteilhafterweise 80:20 bis 99,5:0,5 und insbesondere 90:10 bis 99,5:0,5.

Das partikuläre Trägermaterial 6 besteht in der dargestellten Ausführungsform aus einem keramischen Material, das insbesondere aus der Gruppe bestehend aus: SiC, WC, $B_4C$, BN, $Si_3N_4$, $Al_2O_3$, MgO, $ZrO_2$ und beliebigen Gemischen daraus ausgewählt ist. SiC ist aufgrund der guten Verarbeitbarkeit, seinen sehr guten mechanischen Eigenschaften und darüber hinaus aufgrund seines moderaten Preises besonders bevorzugt. Das partikuläre Trägermaterial 6 liegt dann in Form von keramischen Körnern vor.

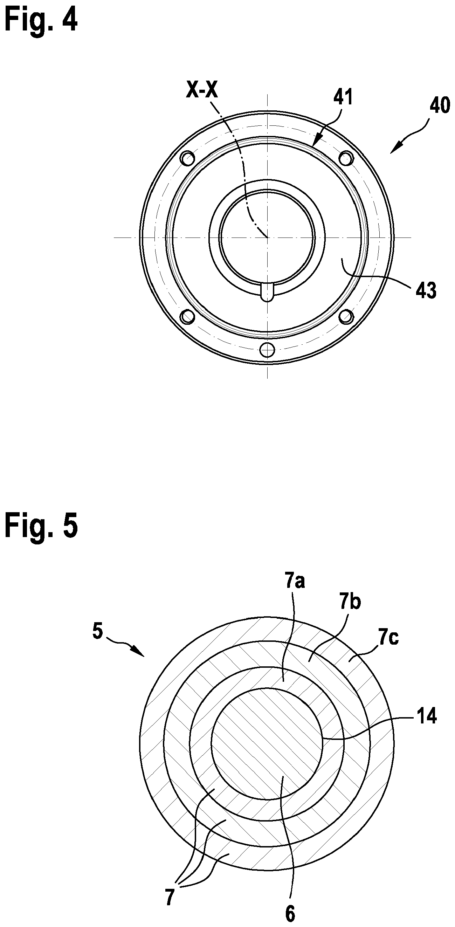

Die Verwendung von keramischem partikulärem Trägermaterial 6 hat noch einen weiteren Vorteil, der gut aus Figur 5 ersichtlich ist: so kann zwischen dem partikulären Trägermaterial 6 und dem graphenhaltigen Material 7 besonders leicht eine stoffschlüssige Verbindung 14 gebildet werden, durch die das graphenhaltige Material 7 fest mit der Oberfläche des partikulären Trägermaterials 6 verbunden wird. In diesem Falle handelt es sich insbesondere um eine Sinterverbindung, die sich durch eine hohe Stabilität auszeichnet, wodurch die Abriebfestigkeit erhöht wird.

Da eine dopaminhaltige Kohlenstoffquelle verwendet wurde, wird bei Raumtemperatur eine sehr gute elektrische Leitfähigkeit von ca. $5,3 \times 10^{-2}$ S/cm bei hoher Bruchzähigkeit, insbesondere größer als $5\ \mathrm{MPa}\ \sqrt{m}$, erreicht.

Die vorstehenden Ausführungen können analog auch für den rotierenden Gleitring 2 gelten, wodurch sich die erfindungsgemäß erzielten Effekte potenzieren lassen.

Figur 3 zeigt eine Lageranordnung 40 im Längsschnitt. Die Lageranordnung 40 ist als Gleitlager ausgebildet und umfasst zwei Radialgleitlager 41 und ein Axialgleitlager 42, die eine Welle 43 lagern. Figur 4 zeigt dieselbe Lageranordnung 40 der Vollständigkeit halber im Querschnitt. Mindestens eines der gezeigten Gleitlager 41, 42 umfasst eine Gleitfläche, die aus einem gesinterten Material gebildet ist, das ein partikuläres Trägermaterial und ein graphenhaltiges Material umfasst, wie es beispielhaft für den stationären Gleitring in Figur 2 offenbart ist. Das partikuläre Trägermaterial ist mindestens teilweise von dem graphenhaltigen Material ummantelt, so dass das graphenhaltige Material eine Oberfläche des partikulären Trägermaterials mindestens abschnittsweise umgibt.

Wie in Figur 5 ferner zu erkennen ist, ummantelt das graphenhaltige Material 7, das insbesondere bis auf technisch unvermeidbare Rückstände, aus Graphen besteht, das partikuläre Trägermaterial 6 in Form einzelner Lagen 7a, 7b, 7c, die jeweils übereinander angeordnet sind. Vorteilhaft kann die graphenhaltige Ummantelung eine Lage bis 100 Lagen, insbesondere eine Lage bis 20 Lagen und insbesondere eine Lage bis zwölf Lagen an graphenhaltigem Material 7 umfassen. So kann ein Gehalt an Graphen im mit graphenhaltigem Material ummanteltem partikulärem Trägermaterial 5, und damit auch die Abriebfestigkeit gezielt gesteuert werden.

Die Verwendung von mit graphenhaltigem Material ummanteltem partikulärem Trägermaterial 5 ermöglicht die Herstellung eines keramischen Bauteils, insbesondere eines Gleitelements, wie beispielsweise einer Gleitringdichtung oder einer Lageranordnung, mit einer sehr guten Härte, hohem Elastizitätsmodul und sehr guter Abriebfestigkeit bei gleichzeitig ausgezeichneten tribologischen Eigenschaften bei guter elektrischer Leitfähigkeit und hoher Bruchzähigkeit.

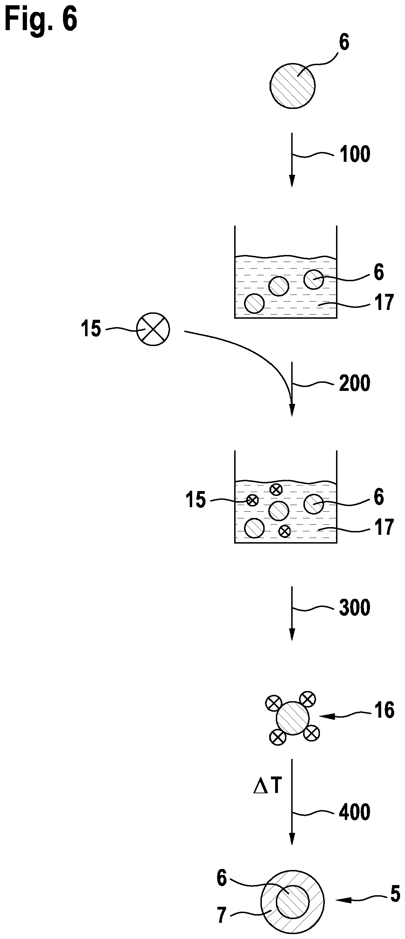

Figur 6 zeigt einen schematischen Verfahrensablauf eines Verfahrens zur Herstellung von mit graphenhaltigem Material ummanteltem partikulärem Trägermaterial 5, wie es beispielsweise in Figur 5 dargestellt ist. Zunächst erfolgt in Schritt 100 ein Dispergieren eines partikulären Trägermaterials 6 in einem Dispergiermittel 17. In der hier gezeigten Ausführungsform wird SiC als partikuläres Trägermaterial 6 verwendet. Als Dispergiermittel 17 kann eine wässrige Lösung, reines Wasser oder aber auch eine alkoholische Lösung vorteilhafterweise zur Anwendung kommen. Das Dispergieren wird derart ausgeführt, dass nach erfolgter Dispergierung das partikuläre Trägermaterial 6 in Form einzelner Partikel im Dispergiermittel 17 verteilt vorliegt. Hierbei kann die Anwendung eines Rührers und/oder eines Homogenisators und/oder von Ultraschall vorteilhaft sein.

In Schritt 200 erfolgt das Zugeben einer Kohlenstoffquelle 15, insbesondere einer kohlenstoffhaltigen Verbindung, die vorteilhaft ausgewählt ist aus der Gruppe bestehend aus: Dopamin oder Mischungen aus Dopamin mit Furfurylalkohol und/oder Glucose, da diese Kohlenstoffquellen aus nachwachsenden Rohstoffen gebildet sind. Die Kohlenstoffquelle 15 fungiert als Precursor des herzustellenden graphenhaltigen Materials.

Im Anschluss daran wird in Schritt 300 das Dispergiermittel 17 unter Erhalt einer Festsubstanz 16 entfernt, was beispielsweise durch Verdampfen des Dispergiermittels 17 in einem Rotationsverdampfer, durch Gefriertrocknen und dergleichen sehr leicht ausgeführt werden kann. Es wird bis zur Gewichtskonstanz der Festsubstanz 16 getrocknet.

Die erhaltene Festsubstanz 16 umfasst nun das partikuläre Trägermaterial 6 sowie den Graphen-Precursor, der auf einer Oberfläche des partikulären Trägermaterials 6 angeordnet ist. Die Festsubstanz 16 kann nun unverändert weiterverarbeitet werden, wird aber vorteilhafterweise zerkleinert und sodann in Schritt 400 carbonisiert. Mit anderen Worten wird die Kohlenstoffquelle 15 derart thermisch behandelt, dass graphenhaltiges Material 7 das partikuläre Trägermaterial 6 mindestens teilweise, insbesondere vollständig, ummantelt. Das Carbonisieren findet insbesondere unter Inertgasatmosphäre, wie z.B. unter Stickstoff, statt. Andere Inertgase sind aber ebenfalls denkbar.

Beispielhaft wird das Carbonisieren im Schritt 400 in einem zweistufigen Temperaturprozess unter Inertgasatmosphäre ausgeführt, wobei in einem ersten Temperaturschritt die Festsubstanz 16 mit einer Heizrate von 5 °C/min auf 80 bis 180 °C aufgeheizt und für 15 bis 25 Stunden auf diesem Temperaturbereich gehalten wird und wobei in einem zweiten Temperaturschritt die Festsubstanz 16 mit einer Heizrate von 5 °C/min auf 600 bis 1500 °C aufgeheizt und für 4 bis 8 Stunden auf diesem Temperaturbereich gehalten wird.

Es wird ein mit graphenhaltigem Material ummanteltes partikuläres Trägermaterial 5 erhalten, wobei das graphenhaltige Material 7 in Form von einzelnen Lagen, also mindestens einer Lage und vorteilhafterweise bis zu 100 Lagen, insbesondere vorteilhaft bis zu 20 Lagen und insbesondere vorteilhaft bis zu 12 Lagen das partikuläre Trägermaterial 6 ummantelt.

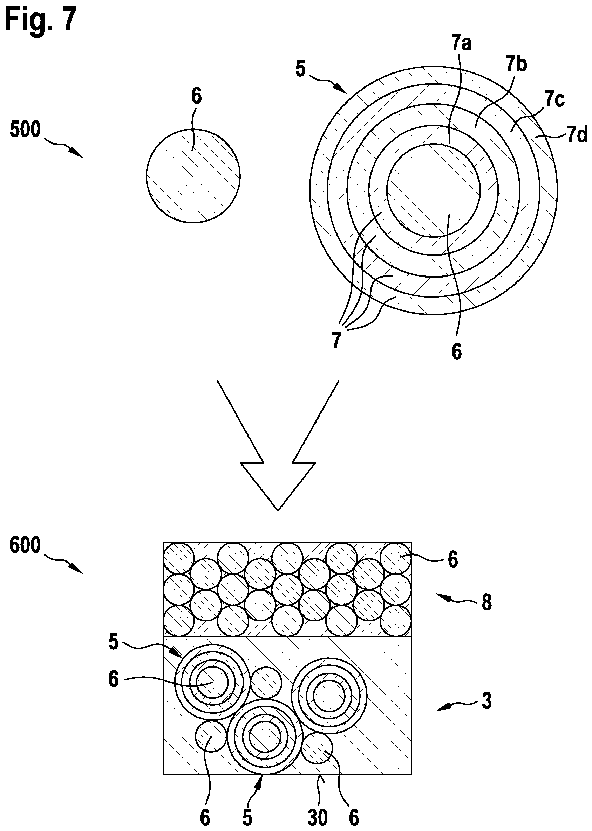

Figur 7 zeigt eine schematische Darstellung eines Verfahrens zur Herstellung eines Gleitelements gemäß einer Ausführungsform der Erfindung, das beispielhaft in Form eines Gleitrings 3 ausgebildet ist. Hierbei wird in Verfahrensschritt 500 zunächst eine Mischung aus einem partikulären Trägermaterial 6 und einem mindestens teilweise, insbesondere vollständig, mit einem graphenhaltigen Material ummantelten partikulären Trägermaterial 5 hergestellt. Das partikuläre Trägermaterial 6 ist insbesondere ein keramisches Material, das vorzugsweise aus der Gruppe bestehend aus: SiC, WC, $B_4C$, BN, $Si_3N_4$, $Al_2O_3$, MgO, $ZrO_2$ und beliebigen Gemischen daraus ausgewählt ist, und insbesondere SiC ist. Das Mischen kann insbesondere als Trockenmischen ausgeführt werden. Im Anschluss daran wird in Verfahrensschritt 600 die erhaltene Mischung gesintert. Durch das Sintern wird ein Gleitring 3 erhalten, der sich durch ein porenfreies Sintermaterial auszeichnet. Hierdurch ist die Dichte des Gleitrings 3 deutlich erhöht, wodurch auch ein Abriebvolumen erhöht ist. Der somit hergestellte Gleitring 3 zeichnet sich durch eine ausgezeichnete Stabilität, selbst bei starker mechanischer und/oder thermischer Belastung aus.

Wie in Figur 7 ferner gezeigt, kann die vorstehend durch Verfahrensschritt 500 erhaltene Mischung auf einen Basiskörper 8 aufgebracht werden, wobei der Basiskörper 8 ebenfalls insbesondere aus einem keramischen Material, insbesondere ausgewählt aus der Gruppe bestehend aus: SiC, WC, $B_4C$, BN, $Si_3N_4$, $Al_2O_3$, MgO, $ZrO_2$ und beliebigen Gemischen daraus, und insbesondere aus SiC, besteht. Hierdurch können bei gleichbleibend guter Qualität Materialkosten eingespart werden.

Bezugszeichenliste:

| 1 | Gleitringdichtungsanordnung |
|---|---|
| 2 | rotierender Gleitring |
| 3 | stationärer Gleitring |
| 4 | Dichtspalt |
| 5 | mit graphenhaltigem Material ummanteltes partikuläres Trägermaterial |
| 6 | partikuläres Trägermaterial |
| 7 | graphenhaltiges Material |
| 8 | Basiskörper |
| 9 | Mitnehmerelement |
| 10 | rotierendes Bauteil |
| 11 | Gehäuse |
| 12, 13 | Dichtringe |
| 14 | stoffschlüssige Verbindung |
| 15 | Kohlenstoffquelle |
| 16 | Festsubstanz |
| 17 | Dispergiermittel |
| 20 | Produktbereich |
| 21 | Atmosphärenbereich |
| 29 | erste Gleitfläche |
| 30 | zweite Gleitfläche |
| 31 | Rückseite |
| 40 | Lageranordnung |
| 41 | Radialgleitlager |
| 42 | Axialgleitlager |
| 43 | Welle |
| X-X | Axialrichtung |
| 100-600 | Verfahrensschritte |

**Patentansprüche**

1. Keramisches Bauteil, umfassend

    - ein partikuläres Trägermaterial (6) und ein graphenhaltiges Material (7),
    - wobei das partikuläre Trägermaterial (6) mindestens teilweise von dem graphenhaltigen Material (7) ummantelt ist,
    - wobei zwischen dem partikulären Trägermaterial (6) und dem graphenhaltigen Material (7) eine stoffschlüssige Verbindung (14) vorhanden ist, und
    - wobei das keramische Bauteil bei Raumtemperatur einen spezifischen elektrischen Widerstand von 1 Ω cm bis 100 Ω cm aufweist, und
- ferner umfassend einen ersten Basiskörper, wobei der erste Basiskörper ausschließlich das partikuläre Trägermaterial (6) aufweist.

2. Keramisches Bauteil nach Anspruch 1, wobei das partikuläre Trägermaterial (6) vollständig von dem graphenhaltigen Material (7) ummantelt ist.

3. Keramisches Bauteil nach einem der vorhergehenden Ansprüche, wobei das keramische Bauteil aus einem Gemisch an partikulärem Trägermaterial (6) und mit graphenhaltigem Material ummanteltem partikulärem Trägermaterial (5) besteht.

4. Keramisches Bauteil nach Anspruch 3, wobei ein Masseverhältnis an partikulärem Trägermaterial (6) und mit graphenhaltigem Material ummanteltem partikulärem Trägermaterial (5) 80:20 bis 99,5:0,5, insbesondere 90:10 bis 99,5:0,5, beträgt.

5. Keramisches Bauteil nach einem der vorhergehenden Ansprüche, wobei das partikuläre Trägermaterial (6) aus einem keramischen Material, insbesondere ausgewählt aus der Gruppe bestehend aus: SiC, WC, B$_4$C, BN, Si$_3$N$_4$, Al$_2$O$_3$, MgO, ZrO$_2$ und Gemischen daraus, und insbesondere aus SiC, besteht.

6. Keramisches Bauteil nach einem der vorhergehenden Ansprüche, wobei die graphenhaltige Ummantelung eine Lage bis 100 Lagen (7a, 7b, 7c, 7d), insbesondere eine Lage bis 20 Lagen (7a, 7b, 7c, 7d) und insbesondere eine Lage bis zwölf Lagen (7a, 7b, 7c, 7d) an graphenhaltigem Material (7) umfasst.

7. Keramisches Bauteil nach einem der vorhergehenden Ansprüche, wobei das keramische Bauteil 6 bis 8 Vol% Makroporen, bezogen auf das Gesamtvolumen des keramischen Bauteils, aufweist.

8. Gleitelement, umfassend eine erste Gleitfläche, welches ein keramisches Bauteil nach einem der vorhergehenden Ansprüche ist.

9. Gleitringdichtung umfassend:

- einen rotierenden ersten Gleitring (2) mit einer ersten Gleitfläche (29) und einen stationären zweiten Gleitring (3) mit einer zweiten Gleitfläche (30), welche zwischen sich einen Dichtspalt (4) definieren,
- wobei der erste Gleitring (2) und/oder der zweite Gleitring (3) ein Gleitelement nach Anspruch 8 ist.

10. Lageranordnung, insbesondere Gleitlager oder Wälzlager, insbesondere Radialgleitlager (41) oder Axialgleitlager (42), umfassend wenigstens ein Gleitelement nach Anspruch 8.

11. Halterung eines Raumflugkörpers, welche ein keramisches Bauteil nach einem der vorhergehenden Ansprüche ist.

**Claims**

1. A ceramic component comprising:

- a particulate support material (6) and a graphene-containing material (7),
- wherein the particulate support material (6) is at least partially coated with the graphene-containing material (7),
- wherein a material bond (14) is present between the particulate support material (6) and the graphene-containing material (7), and
- wherein said ceramic member has an electrical resistivity of from 1 Ωcm to 100 Ωcm at room temperature, and
- further comprising a first base body, said first base body exclusively comprising said particulate support material (6).

2. The ceramic component according to claim 1, wherein the particulate support material (6) is completely coated with the graphene-containing material (7).

3. The ceramic component according to one of the preceding claims, wherein the ceramic component consists of a mixture of particulate support material (6) and particulate support material (5) coated with graphene-containing material.

4. The ceramic component according to claim 3, wherein a mass ratio of particulate support material (6) and particulate support material (5) coated with graphene-containing material is 80:20 to 99.5:0.5, especially 90:10 to 99.5:0.5.

5. The ceramic component according to one of the preceding claims, wherein the particulate support material (6) consists of a ceramic material, especially selected from the group consisting of: SiC, WC, B$_4$C, BN, Si$_3$N$_4$, Al$_2$O$_3$, MgO, ZrO$_2$ and mixtures thereof, and especially SiC.

6. The ceramic component according to one of the preceding claims, the graphene-containing sheathing comprising one layer up to 100 layers (7a, 7b, 7c, 7d), especially one layer up to 20 layers (7a, 7b, 7c, 7d) and especially one layer up to twelve layers (7a, 7b, 7c, 7d) of graphene-containing material (7).

**7.** The ceramic component according to one of the preceding claims, the ceramic component having 6 to 8% by volume of macropores in relation to the total volume of the ceramic component.

**8.** A sliding member, comprising a first sliding surface, which sliding member being a ceramic component according to one of the preceding claims.

**9.** A mechanical seal comprising:

- a rotating first slide ring (2) having a first sliding surface (29) and a stationary second slide ring (3) having a second sliding surface (30) defining a sealing gap (4) therebetween,
- the first slide ring (2) and/or the second slide ring (3) being a sliding member according to claim 8.

**10.** A bearing arrangement, especially a plain bearing or roller bearing, especially a radial plain bearing (41) or axial plain bearing (42), comprising at least one sliding member according to claim 8.

**11.** A holder for a space craft which is a ceramic component according to one of the preceding claims.

**Revendications**

**1.** Composant céramique comprenant

- un matériau porteur (6) particulaire et un matériau contenant du graphène (7),
- dans lequel le matériau porteur (6) particulaire est enrobé au moins partiellement par le matériau contenant du graphène (7),
- dans lequel une liaison de matière (14) est présente entre le matériau porteur (6) particulaire et le matériau contenant du graphène (7), et
- dans lequel le composant céramique présente à température ambiante une résistance électrique spécifique de 1 $\Omega$ cm à 100 $\Omega$ cm, et
- comprenant en outre un premier corps de base, dans lequel le premier corps de base présente exclusivement le matériau porteur (6) particulaire.

**2.** Composant céramique selon la revendication 1, dans lequel le matériau porteur (6) particulaire est complètement enrobé par le matériau contenant du graphène (7).

**3.** Composant céramique selon l'une quelconque des revendications précédentes, dans lequel le composant céramique se compose d'un mélange de matériau porteur (6) particulaire et de matériau porteur (5) particulaire enrobé avec le matériau contenant du graphène.

**4.** Composant céramique selon la revendication 3, dans lequel un rapport de masse de matériau porteur (6) particulaire et de matériau porteur (5) particulaire enrobé avec le matériau contenant du graphène est de 80:20 à 99,5:0,5, en particulier de 90:10 à 99,5:0,5.

**5.** Composant céramique selon l'une quelconque des revendications précédentes, dans lequel le matériau porteur particulaire (6) se compose d'un matériau céramique, en particulier sélectionné à partir du groupe composé de : SiC, WC, $B_4C$, BN, $Si_3N_4$, $Al_2O_3$, MgO, $ZrO_2$ et de mélanges de ceux-ci, et en particulier de SiC.

**6.** Composant céramique selon l'une quelconque des revendications précédentes, dans lequel l'enrobage contenant du graphène comporte une couche jusqu'à 100 couches (7a, 7b, 7c, 7d), en particulier une couche jusqu'à 20 couches (7a, 7b, 7c, 7d) et en particulier une couche jusqu'à douze couches (7a, 7b, 7c, 7d) de matériau contenant du graphène (7).

**7.** Composant céramique selon l'une quelconque des revendications précédentes, dans lequel le composant céramique présente 6 à 8 % en poids de macropores, par rapport au volume entier du composant céramique.

**8.** Elément de glissement comprenant une première surface de glissement qui est un composant céramique selon l'une quelconque des revendications précédentes.

**9.** Garniture étanche à anneau glissant comprenant :

- un premier anneau glissant (2) rotatif avec une première surface de glissement (29) et un second anneau glissant (3) stationnaire avec une seconde surface de glissement (30) qui définissent entre elles une fente étanche (4),
- dans lequel le premier anneau glissant (2) et/ou le second anneau glissant (3) est un élément de glissement selon la revendication 8.

**10.** Agencement de palier, en particulier palier à glissement ou palier à roulement, en particulier palier à glissement radial (41) ou palier à glissement axial (42), comprenant au moins un élément de glissement selon la revendication 8.

**11.** Support d'un engin spatial qui est un composant céramique selon l'une quelconque des revendications précédentes.

# Fig. 1

## Fig. 2

## Fig. 3

EP 3 649 094 B1

# Fig. 4

X-X    41    40

43

# Fig. 5

7a   7b   7c

5

14

7   6

13

# Fig. 6

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014205297 A1
- DE 102014018275 A1